Europäisches Patentamt

European Patent Office

Office européen des brevets

(11) Veröffentlichungsnummer: **0 466 946 A1**

## EUROPÄISCHE PATENTANMELDUNG

(21) Anmeldenummer: **90113544.2**

(51) Int. Cl.⁵: **A01C 3/02**

(22) Anmeldetag: **14.07.90**

(43) Veröffentlichungstag der Anmeldung:
**22.01.92 Patentblatt 92/04**

(84) Benannte Vertragsstaaten:
**DE FR NL**

(71) Anmelder: **Reck, Anton**
**Reckstrasse 1**
**W-7952 Betzenweiler(DE)**

(72) Erfinder: **Reck, Anton**
**Reckstrasse 1**
**W-7952 Betzenweiler(DE)**

(74) Vertreter: **Patentanwälte Dipl.-Ing. E. Eisele**
**Dr.-Ing. H. Otten**
**Seestrasse 42**
**W-7980 Ravensburg(DE)**

(54) **Güllerühranlage für Umlaufkanäle.**

(57) Bei einer Güllerühranlage für Umlaufkanäle mit einem im Strömungsverlauf in eine Quertrennwand (8) eingebauten Fenster (13) wird die Rührvorrichtung, die wenigstens einen im Bereich des Fensters (13) angeordneten Rührpropeller aufweist, auf einem zwei Gleitschienen (19) umfassenden Führungsgestell (11) angebracht. Um dieses ständig in die korrodierende Gülle eintauchende Führungsgestell nach Jahren wieder leicht entfernen und durch ein neues ersetzen zu können, ist vorgesehen, es mit seinem unteren Endabschnitt in einer Steckfassung zu halten und mit seinem oberen Endabschnitt oberhalb des Gülleniveaus am Bauwerk zu befestigen. Insbesondere kann am Führungsgestell (11) ein zu dessen Ebene und Längsrichtung senkrechter Paßrahmen (20) befestigt sein, der sich in das Fenster (13) einfügt und seinerseits die Blende des Rührpropellers aufnimmt. Oben wird das Führungsgestell (11) auf einen Träger (22) aufgelegt und an diesem angeklemmt.

FIG.2

Die Erfindung betrifft eine Güllerühranlage nach dem Oberbegriff des Hauptanspruchs.

Unter einem Umlaufkanal wird eine unter einem Stall angeordnete betonierte Güllegrube verstanden, die durch Trennwände so unterteilt ist, daß sich ein endloser Kanal ergibt. Kot und Harn der Tiere füllt durch Spaltenböden o. dgl. unmittelbar in diesen Kanal. Durch die Förderwirkung des Rührpropellers bildet sich eine Umlaufströmung aus, welche auch die festen Bestandteile der Gülle mitschwemmt, so daß eine hervorragende Durchmischung und Belüftung der gesamten Güllemasse erreicht wird. Dies gilt auch dann, wenn die Breite einzelner Kanalabschnitte variiert und der Umlaufweg insgesamt sehr groß ist, z. B. über 100 m beträgt. Dank der geringeren Ätzwirkung und Geruchsbildung infolge öfteren Rührens kann die Gülle ständig ausgefahren werden. Der hohe Nährstoffgehalt der Gülle erbringt wesentliche Einsparungen an mineralischen Düngemitteln.

Die Führungsbahn dient dazu, die Rührvorrichtung schnell und einfach in Betriebsposition zu bringen, nämlich so, daß der Rührpropeller sich in dem Fenster der Querwand befindet. Nicht selten ist in einem landwirtschaftlichen Betrieb nur eine Rührvorrichtung vorhanden, die reihum für mehrere Umlaufkanäle eingesetzt wird. In diesem Fall kommt es auf die reibungslose Durchführung des Stellungswechsels besonders an. Aber auch bei ständig installierten elektrisch betriebenen Rührvorrichtungen ist es wichtig, diese mit Hilfe der Führungsbahn zu Inspektionszwecken leicht herausnehmen zu können.

Bei einer bekannten gattungsgemäßen Güllerühranlage sind die Winkelschienen, welche die Führungsbahn bilden, am Boden des Umlaufkanals oder an den seitlichen Leibungen des Fensters festgeschraubt oder einbetoniert, um den Rührpropeller bzw. die ihn umgebende Rechteckblende einwandfrei in das Fenster einführen zu können. Da die Schienen jedoch ständig der aggressiven Gülle ausgesetzt sind, erfordern entsprechende Korrosionserscheinungen gelegentlich eine Erneuerung derselben. Es ist dann nur mit äußersten Schwierigkeiten möglich, die ebenfalls korrodierten Befestigungsschrauben zu lösen bzw. die Verankerungen im Beton auszustemmen und die neuen Schienen zu befestigen, da sich die Befestigungsstelle im tiefsten Güllesumpf befindet. Wegen der Güllegase ist auch das Betreten des ausgepumpten Kanals gefährlich.

Es ist zwar schon vorgeschlagen worden, die Führungsbahn aus einem korrosionsfesten Edelstahl herzustellen. Dies ist jedoch mit beträchtlichen zusätzlichen Kosten verbunden, wenn eine gleichwertige Stabilität wie bei der Verwendung von üblichen verzinkten Winkelprofilschienen erreicht werden soll.

Der Erfindung liegt die Aufgabe zugrunde, bei einer solchen Güllerühranlage das Auswechseln der Führungsbahn zu vereinfachen.

Diese Aufgabe wird erfindungsgemäß dadurch gelöst, daß die Führungsbahn mit ihrem unteren Endabschnitt im Bereich des Fensters in einer Steckfassung gehalten und mit ihrem oberen Endabschnitt oberhalb des Gülleniveaus am Bauwerk befestigt ist. Somit läßt sich die obere Befestigung jederzeit leicht erreichen und lösen, da die Korrosion hier wesentlich geringer ist. Sodann kann die durch Korrosion beschädigte Führungsbahn mit ihrem unteren Endabschnitt einfach aus der Steckfassung herausgezogen werden und die neue Führungsbahn braucht lediglich eingesteckt zu werden. Schwierige und gefährliche Arbeiten unterhalb des normalen Gülleniveaus sind nicht mehr erforderlich.

Die Steckfassung kann als Vertiefung vor dem Fenster oder Aussparung an den seitlichen Fensterleibungen ausgebildet und zur Aufnahme der Schienenenden vorgesehen sein. Besonders zweckmäßig ist es Jedoch, wenn am unteren Ende der Führungsbahn ein zu deren Ebene und zu deren Längsrichtung senkrechter Paßrahmen befestigt ist, der sich in das Fenster einfügt und dadurch die Führungsbahn quer zur Einschubrichtung hält und seinerseits eine den Rührpropeller umgebende Rechteckblende aufnimmt. In diesem Fall brauchen also gebäudeseitig außer dem eigentlichen Fenster keine besonderen Vorkehrungen getroffen zu werden.

Der obere Endabschnitt der Führungsbahn wird vorzugsweise auf einen am Bauwerk befestigten Querträger aufgelegt und an diesem angeklemmt. Um den variablen Einbaubedingungen zu entsprechen, ist es vorteilhaft, den Querträger längenveränderbar auszubilden.

Im Hinblick darauf, daß eine Rührvorrichtung mit einer Rechteckblende mit je nach Typ festliegenden Abmessungen und bei unterschiedlichen Einbauneigungen immer genau in das Fenster passen und in diesem festgehalten werden soll, wird vorgeschlagen, daß die obere Leibung des Fensters in Einschubrichtung bezüglich der Horizontalen stärker geneigt ist als die Führungsbahn. Somit legt sich die obere Kante der Reckteckblende der Rührvorrichtung bzw. der Paßrahmen der Führungsbahn immer spielfrei an dieser geneigten oberen Leibung an, wenn man nur die Rührvorrichtung bzw. die Führungsbahn weit genug einschiebt. Um die Abmessungen des Fensters und speziell die Neigung der oberen Leibung bauseitig leicht verwirklichen zu können, wird vorgeschlagen, daß ein entsprechender Metallrahmen als verlorene Schalung verwendet wird.

Ein Ausführungsbeispiel der Erfindung wird nachfolgend anhand der Zeichnung erläutert. Im einzelnen zeigt

Fig. 1    eine perspektivische Darstellung eines Umlaufkanals mit Güllerühranlage,

Fig. 2    einen Längsschnitt der Einbaustelle der Güllerühranlage mit einem Führungsgestell,

Fig. 3    die Draufsicht der Einbaustelle nach Fig. 2,

Fig. 4    eine perspektivische Darstellung des Führungsgestells und der Rührvorrichtung während des Einbringens derselben und

Fig. 5    eine perspektivische Darstellung einer verlorenen Schalung für das Rührfenster.

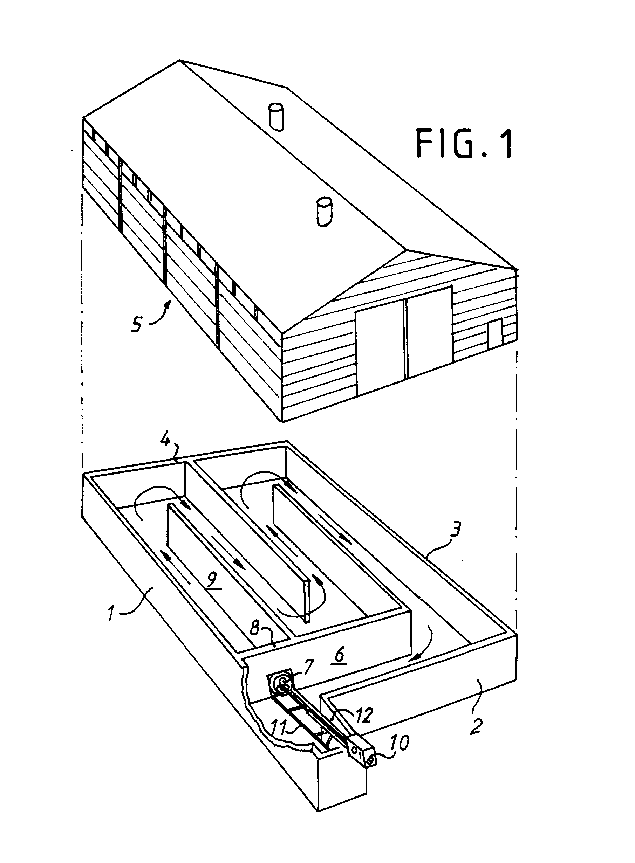

Die schematische Darstellung nach Fig. 1 will deutlich machen, daß die Umfassungswände 1 bis 4 des in den Erdboden eingesenkten Umlaufkanals gleichzeitig das Fundament für ein Stallgebäude 5 bilden. Die Exkremente der Tiere fallen durch den Spaltenboden des Stalls an beliebigen Stellen in den Umlaufkanal. Durch drei Längstrennwände werden zwei hin- und zwei zurückführende Kanalabschnitte gebildet. Pfeile deuten die Strömungsrichtung an. Nach dem letzten Längsabschnitt wird die Gülle in den Querkanal 6 umgeleitet und von dort mittels eines Propellers 7, der in einem Fenster der Querwand 8 angeordnet ist, in den ersten Längskanal 9 gepumpt. Der Propeller wird im Beispiel von einem Elektromotor 10 angetrieben. Die Propellerwelle und das Führungsgestell 11, auf dem die Rührvorrichtung ruht, sind über eine Nische 12 des Umlaufkanals herausgeführt.

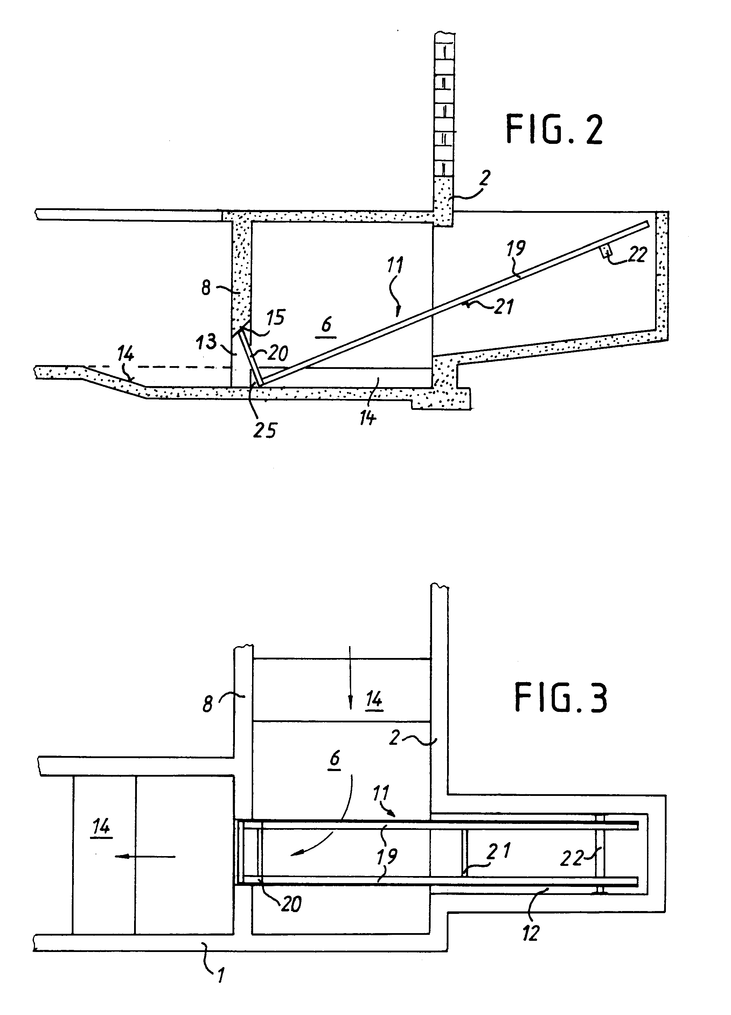

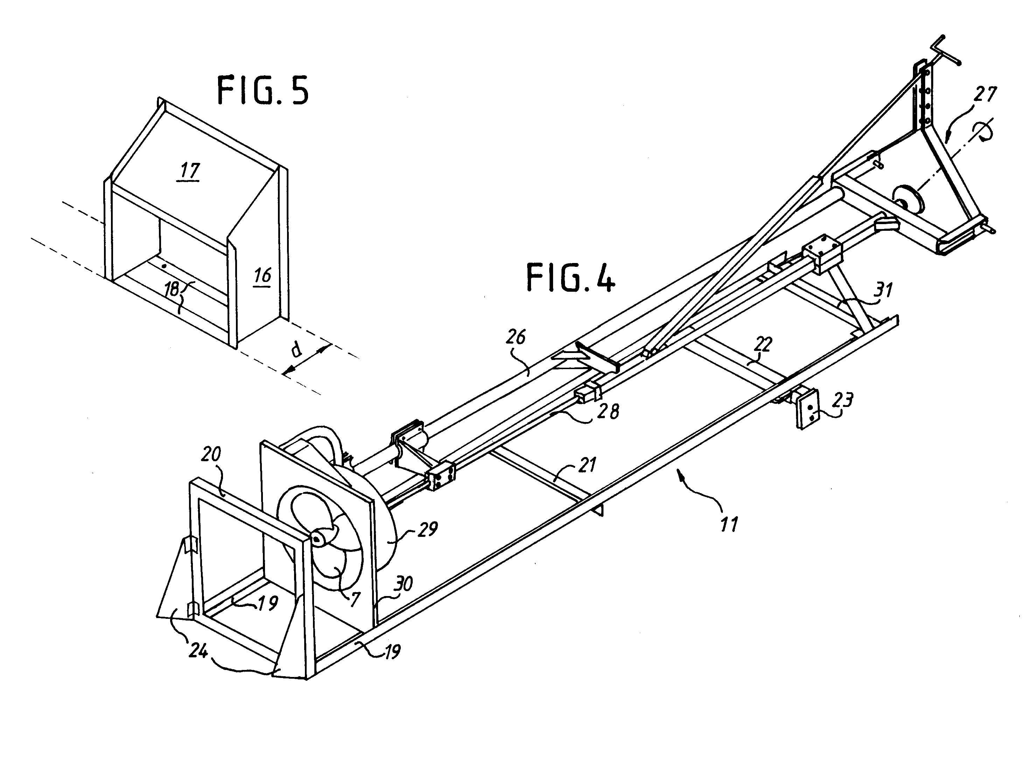

Die Figuren 2 und 3 zeigen den Einbau des Führungsgestells 11 deutlicher. Die Kanalsohle ist im Bereich vor und hinter dem Fenster 13 in der Querwand 8 gegenüber der übrigen Kanalsohle über Rampen 14 vertieft. Das Fenster 13 mit seiner stark geneigten oberen Leibung 15 wird dadurch auf einfache Weise und mit genauen Abmessungen ausgespart, daß die in Fig. 5 dargestellte verlorene Schalung aus Blech vor dem Vergießen in die Betonschalung eingesetzt wird. Die beiden Seitenwände 16 der verlorenen Schalung mit ihren nach außen abgekanteten Rändern sind durch die schräge obere Wand 17 und zwei untere Verbindungsstreifen 18 miteinander verbunden. Die letzteren dienen zur Befestigung der verlorenen Schalung an der Kanalsohle.

Das Führungsgestell 11 umfaßt zwei querschnittlich winkelförmige Führungsschienen 19, die mit ihren Auflageschenkeln einander zugewandt sind, und einen Paßrahmen 20, der zur Ebene und Längsrichtung der Führungsschienen 19 senkrecht steht. Die Führungsschienen 19 sind durch eine Querstrebe 21 miteinander verbunden und liegen mit ihren oberen Endabschnitten auf einem an den Seitenwänden der Nische 12 befestigten horizontalen Träger 22 auf.

Fig. 4 zeigt dies deutlicher. Der Paßrahmen 20 besteht aus vier Rahmenschenkeln mit ebenfalls winkelförmigem Querschnitt, wobei die in Längsrichtung stehenden Schenkel der Winkeleisen zum oberen Ende des Führungsrahmens hin weisen. Der Träger 22 besteht aus zwei ineinander gesteckten Vierkantrohren und ist dadurch zur Anpassung an die bauseitigen Verhältnisse längenveränderbar. Er wird mit seinen Befestigungsflanschen 23 an den Nischenseitenwänden in einer von der Gülle nicht erreichten Höhe befestigt.

Das beschriebene Führungsgestell 11 wird mit dem Paßrahmen 20 voraus in die Nische 12 bzw. den Querkanal 6 eingeführt und vorwärts in das Fenster 13 geschoben, bis der obere Rahmenschenkel des Paßrahmens 20 an der geneigten oberen Leibung 15 des Fensters 13 zur Anlage kommt. Die Enden der Führungsschienen 19 werden dann am Träger 22 festgeklemmt. Damit ist der Paßrahmen 20 in dem Fenster 13 bzw. an der Kanalsohle unverrückbar gehalten. Eine entsprechende Festlegung ergibt sich auch dann, wenn die Neigung der Führungsschiene 19 aufgrund bauseitiger Gegebenheiten vom Beispiel in einem gewissen Maße abweicht. Dafür ist die bezogen auf die Führungsschienen 19 stärkere Neigung der oberen Leibung 15 maßgebend.

Durch die beschriebene Festlegung ist der Paßrahmen 20 in der Fensteröffnung auch ausreichend dicht angepaßt. Dreieckige Abdichtzwickel 24, die zum Teil in das Fenster 13 eingeschoben werden, verschließen die seitlichen Öffnungen 25 (Fig. 2), welche sich gegenüber dem Fenster 13 dadurch ergeben können, daß der untere Teil des Paßrahmens 20 über die Querwandfläche vorsteht, was insbesondere bei einer verhältnismäßig dünnen Querwand 8 der Fall ist.

Die in Fig. 4 weiter dargestellte, an sich bekannte Rührvorrichtung besteht im wesentlichen aus einem stabilen Längsholm 26, einer verstellbaren Ankoppelvorrichtung 27 an einen Schlepper zum Antrieb mittels Zapfwelle, einer mehrfach gelagerten Propellerwelle 28, dem Propeller 7 samt Schutzrohr 29 und einer Rechteckblende 30, die mit dem Schutzrohr 29 und dem Traggestell der Rührvorrichtung fest verbunden ist. Mit dieser Rechteckblende 30 und einem dreieckigen Fußrahmen 31 ruht die Rührvorrichtung auf den Führungsschienen 19.

Zum Einsetzen der Rührvorrichtung wird zunächst nur die Recckteckblende 30 auf die Führungsschienen aufgelegt und auf diesen nach unten verschoben. Zum Schluß macht die Rührvorrichtung eine reine Längsbewegung auf den Führungsschienen 19, bis schließlich die Rechteckblende 30 vom Paßrahmen 20 passend und gleichzeitig abdichtend aufgenommen wird. Zum Schluß wird der Fußrahmen 31 auf nicht dargestellte Weise an den Führungsschienen 19 festgeklemmt oder festgeschraubt. Ebenso einfach und schnell kann die Rührvorrichtung von der Verwendungsstelle entnommen und auf eine andere umgesetzt werden.

Der entscheidende Vorteil der Erfindung zeigt sich, wenn das Führungsgestell nach mehr oder weniger Jahren - der Zeitraum hängt von der Güte der Verzinkung und der Zusammensetzung der Gülle ab - bis zur Unbrauchbarkeit korrodiert ist. Es kann dann nach Lösen der gut zugänglichen Verklemmung am Träger 22 einfach herausgezogen und durch ein neues ersetzt werden.

| 1 | Umfassungswand |
|---|---|
| 2 | Umfassungswand |
| 3 | Umfassungswand |
| 4 | Umfassungswand |
| 5 | Stallgebäude |
| 6 | Querkanal |
| 7 | Propeller |
| 8 | Querwand |
| 9 | Längskanal |
| 10 | Elektromotor |
| 11 | Führungsgestell |
| 12 | Nische |
| 13 | Fenster |
| 14 | Rampe |
| 15 | Leibung |
| 16 | Seitenwand |
| 17 | obere Wand |
| 18 | Verbindungsstreifen |
| 19 | Führungsschienen |
| 20 | Paßrahmen |
| 21 | Querstrebe |
| 22 | Träger |
| 23 | Befestigungsflansch |
| 24 | Abdichtzwickel |
| 25 | Öffnung |
| 26 | Längsholm |
| 27 | Ankoppelvorrichtung |
| 28 | Propellerwelle |
| 29 | Schutzrohr |
| 30 | Rechteckblende |
| 31 | Fußrahmen |
| d | Mauerdicke |

**Patentansprüche**

1. Güllerühranlage für Umlaufkanäle mit einem im Strömungsverlauf in eine Quertrennwand eingebauten Fenster, mit einer Rührvorrichtung mit wenigstens einem Rührpropeller und mit einer aus insbesondere zwei parallelen Gleitschienen bestehenden Führungsbahn, die es erlaubt, die Rührvorrichtung schnell und sicher in Betriebsstellung zu bringen, so daß der Propeller sich im Fenster befindet, und sie wieder zu entfernen, dadurch gekennzeichnet, daß das Führungsgestell (11) mit seinem unteren Endabschnitt im Bereich des Fensters (13) in einer Steckfassung gehalten und mit seinem oberen Endabschnitt oberhalb des Gülleniveaus am Bauwerk befestigt ist.

2. Güllerühranlage nach Anspruch 1, dadurch gekennzeichnet, daß am unteren Ende des Führungsgestells (11) ein zu dessen Ebene und zur Längsrichtung senkrechter Paßrahmen (20) befestigt ist, der sich in das Fenster (13) einfügt und dadurch das Führungsgestell (11) hält und seinerseits eine den Rührpropeller (7) umgebende Rechteckblende (28) aufnimmt.

3. Güllerühranlage nach Anspruch 1, dadurch gekennzeichnet, daß die obere Leibung (15) des Fensters (13) in Einschubrichtung bezüglich der Horizontalen stärker geneigt ist als die Führungsschienen (19).

4. Güllerühranlage nach Anspruch 1, dadurch gekennzeichnet, daß der obere Endabschnitt des Führungsgestells (11) auf einem am Bauwerk befestigten Träger (22) aufliegt und an diesem angeklemmt ist.

FIG. 1

FIG. 2

FIG. 3

FIG.4

FIG.5

# EUROPÄISCHER RECHERCHENBERICHT

Nummer der Anmeldung

**EP 90 11 3544**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | LANDTECHNIK. vol. 34, no. 9, 01 September 1979, HANNOVER DE Seiten 400 - 401; VON OY: "ENTMISTUNGS- UND DUNGLAGERUNGSVERFAHREN FÜR LIEGEBOXEN- LAUFSTÄLLE IM VERGLEICH" * Seite 401, Absatz 1; Figuren 3, 4 * | 1-4 | A 01 C 3/02 |
| A | NL-A-8 102 842 (HOOPMAN ONDERZOEK & ONTWIKKE- LING BV) * Seite 2, Zeilen 12 - 23; Figur 1 * | 1-4 | |
| A | LANDBOUW MECHANISATIE. vol. 34, no. 5, 01 Mai 1983, WAGENINGEN NL Seiten 495 - 498; TOREN: "MESTVERWERKING BIJ LIGBOXENSTALLEN MET RO- OSTERVLOEREN" * Seite 497, linke Spalte, Absatz 1; Figuren 1, 3 * | 1 | |
| A | EP-A-0 008 462 (RECK) | | |

| | RECHERCHIERTE SACHGEBIETE (Int. Cl.5) |
|---|---|
| | A 01 C A 01 K |

Der vorliegende Recherchenbericht wurde für alle Patentansprüche erstellt

| Recherchenort | Abschlußdatum der Recherche | Prüfer |
|---|---|---|
| Den Haag | 14 März 91 | VON ARX V.U. |